Europäisches Patentamt

European Patent Office

Office européen des brevets

(11) Publication number : **0 545 524 A1**

# EUROPEAN PATENT APPLICATION

(21) Application number : **92308854.6**

(51) Int. Cl.⁵ : **G02B 5/32**

(22) Date of filing : **29.09.92**

(30) Priority : **11.10.91 US 774410**

(43) Date of publication of application :
**09.06.93 Bulletin 93/23**

(84) Designated Contracting States :
**DE FR GB**

(71) Applicant : **INTERNATIONAL BUSINESS MACHINES CORPORATION**
**Armonk, NY 10504 (US)**

(72) Inventor : **Dickson, LeRoy David**
**17660 Racoon Court**
**Morgan Hill, CA 95037 (US)**
Inventor : **Luecke, Francis Stephen**
**14620 Nelson Way**
**San Jose, CA 95124 (US)**

(74) Representative : **Killgren, Neil Arthur**
**IBM United Kingdom Limited Intellectual Property Department Hursley Park**
**Winchester Hampshire SO21 2JN (GB)**

(54) **Hologram system.**

(57) A first volume hologram (18) diffracts a portion (22) of the beam of light as a first beam and transmits the remaining portion (20) of the beam of light as a second beam. A second volume hologram (30) diffracts either the first or the second beam to a desired angle and transmits the remaining beam undiffracted. Desired beam separations at desired angles may thereby be achieved for use in optical data storage systems.

FIG. 1

EP 0 545 524 A1

The present invention relates generally to volume holograms and more specifically to volume holograms for use in optical data storage systems.

Holograms are recordings of light intensity patterns created by the interference of two beams of mutually coherent light (the two beams are usually obtained by splitting a single laser beam). There are two major categories of holograms: transmissive and reflective. These two categories are further divided into two physical types of holograms: surface relief holograms and volume holograms. Surface relief holograms can be recorded using photolithographic processes. The interference pattern is recorded as a periodic variation in thickness of the material while the refractive index of the material remains fixed.

In a volume hologram, the interference pattern is recorded as a periodic variation in the refractive index of the material while the thickness of the material remains fixed. The periodic variation in refractive index creates surfaces of peak refractive index within the material. These surfaces are referred to as "Bragg surfaces." When the interference pattern is created by two plane waves or two waves with identical curvature at the hologram surface, the Bragg surfaces will be Bragg planes.

When the hologram is re-illuminated by one of the original beams at an angle that results in maximum diffraction efficiency, the internal angle of the beam relative to the Bragg planes is referred to as the "Bragg angle."

The external angle of incidence at which maximum diffraction efficiency occurs is also often referred to as the Bragg angle.

Recently, surface relief holograms have been used for optical data storage applications. These holograms allow beams of light to be separated for various purposes. These surface relief hologram systems include the following Japanese applications: JP 1-13246, published January 18, 1989; JP 1-55745, published March 2, 1989; JP 1-55746, published March 2, 1989; JP 1-86337 , published March 31, 1989; JP 1-86332, published March 31, 1989; JP 1-146143, published June 8, 1989; JP 1-53359, published March 1, 1989; JP 63-25845, published February 3, 1988; JP 62-219340, published September 26 1987; and JP 61-123032, published June 10, 1986.

A problem with surface relief holograms is that they are not able to achieve efficient polarization separation except for a limited range of diffraction angles. Polarization separation is very important in magneto-optic systems where the data is sensed as changes in the plane of polarization of light reflected from the optical media.

Volume holograms can be used to do polarization separation over a wide range of diffraction angles. US 4,497,534 issued February 5, 1985 shows the use of a volume hologram for polarization separation. However, volume holograms are limited in thickness to approximately 25 microns and this results in beam separations at relatively large angles of 30-45 degrees.

Smaller beam angle separations are preferred in optical storage systems so that the optical sensors may be located close together and preferably in a single package.

What is needed is a volume hologram system which can achieve beam separation at desired angles.

According to the invention there is provided a hologram system comprising a first volume hologram arranged to receive a radiation beam from a radiation source and to diffract a first portion of the radiation beam as a first beam and to transmit a second portion of the radiation beam as a second beam and a second volume hologram arranged to receive the first and second beams and to diffract one of said beams at a desired angle and to transmit the second beam.

There is further provided a method for operating a hologram system to produce separate light beams comprising the steps of generating a collimated beam of light, directing the beam of light to a first volume hologram such that the first hologram diffracts a first portion of the beam of light into a first beam and transmits a second portion of the beam of light as a second beam, and directing the first and second beams to a second volume hologram, the second hologram diffracting one of said beams at a desired angle and transmitting the other beam.

In a preferred embodiment of the present invention the first and second volume holograms are recorded on opposite sides of a substrate, or alternatively, each hologram may be recorded on a separate substrate and then the two substrates may be cemented together. The first hologram diffracts a portion of the beam of light as a first beam and transmits the remaining portion of the beam of light as a second beam.

The second hologram diffracts either one of the first beam or the second beam to a desired angle and transmits the remaining beam undiffracted.

The first hologram provides the desired beam separation while the second hologram provides the desired angle between the beams.

In order that the invention may be fully understood, preferred embodiments thereof will be described with reference to the accompanying drawings, in which:

Fig. 1 is a schematic diagram of a hologram system of the present invention.

Fig. 2 is a cross sectional view of a hologram of the present invention.

Fig. 3 is a graph of diffraction efficiency versus hologram thickness.

Fig. 4 is a schematic diagram of a system for making the holograms of the present invention.

Fig. 5 is a graph of diffraction efficiency versus the peak change in index of refraction of the hologram medium.

Fig. 6 is a schematic diagram of an alternative embodiment of the present invention.

Fig. 7 is a schematic diagram of an optical data storage system of the present invention.

Fig. 8 is a top view of an optical detector of Fig. 7.

Fig. 9 is a circuit diagram for the system of Fig. 7.

Fig. 10 is a schematic diagram of an alternative optical data storage system of the present invention.

Fig. 11 is a circuit diagram for the optical data storage system of Fig. 10.

Fig. 12 is a schematic diagram of an alternative embodiment of the present invention.

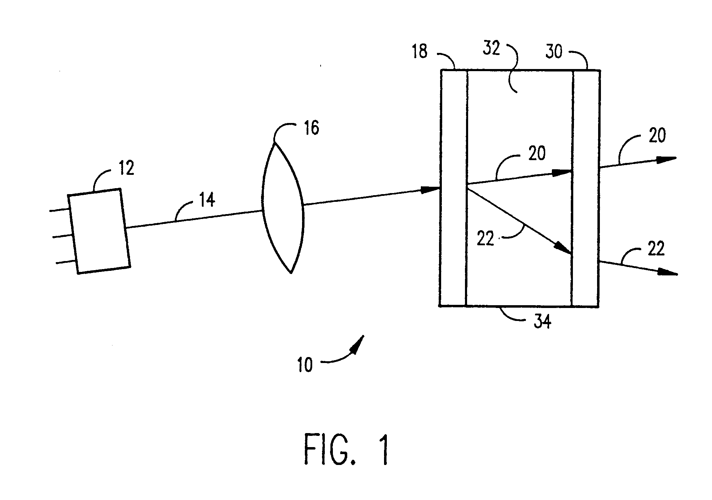

Fig. 1 shows a schematic diagram of a hologram system of the present invention and is designated by the general reference number 10. System 10 has a laser diode 12 which produces a light beam 14. Laser diode 12 may be a gallium-aluminum-arsenide laser diode which generates a light beam at approximately 780 nanometers in wavelength. The beam 14 is collimated by a lens 16. Beam 14 then passes to a beamsplitter hologram 18. Beam 14 hits hologram 18 at the Bragg angle of hologram 18. Hologram 18 splits beam 14 into a transmitted beam 20 and a diffracted beam 22. Beams 20 and 22 may have selected power levels and/or polarization percentages.

Beams 20 and 22 pass to a beam directing hologram 30. Beam 22 hits hologram 30 at the Bragg angle of hologram 30 and is diffracted. Beam 20 hits hologram 30 at a non-Bragg angle such that it is transmitted undiffracted. The beam 22 is diffracted to a new desired angle relative to beam 20. Hologram 18 splits the beams 20 and 22 at a highly divergent angle. Hologram 30 is needed to modify the angle between the two beams.

Holograms 18 and 30 are recorded on a substrate 32. Alternatively, holograms 18 and 30 may be recorded on separate substrates and then the substrates may be cemented together. The combination of holograms 18 and 30 and substrate 32 is referred to as a hologram assembly 34.

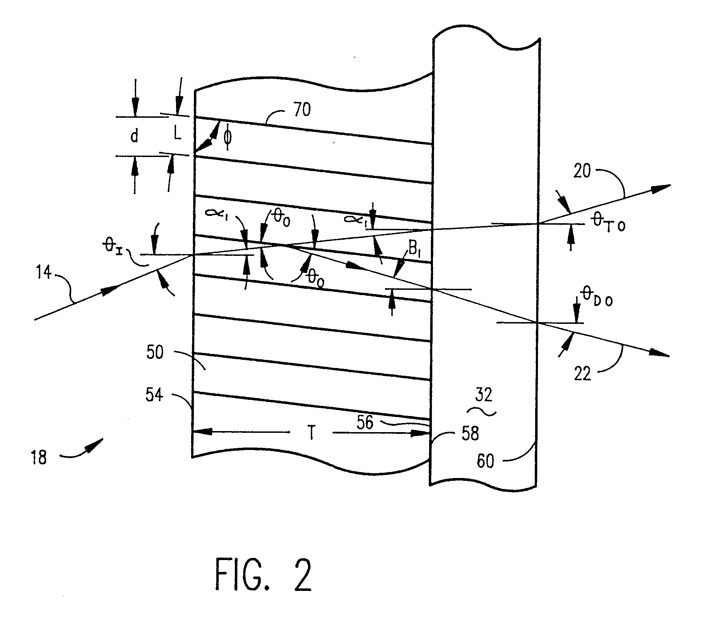

Fig. 2 shows a detailed cross sectional view of hologram 18 in the present invention. Hologram 18 comprises a hologram material 50 deposited to a thickness T on substrate 32. The hologram material is preferably dichromated gelatin and the substrate is preferably glass. Hologram material 18 has a surface 54 and 56, and substrate 32 has a surface 58 and 60.

The hologram material 18 has been manufactured with periodic Bragg planes 70. The Bragg planes 70 have a separation distance L, an external fringe spacing distance d and an angle $\Phi$ relative to surface 54.

In operation, the input beam 14 (having a wavelength $\lambda_1$) enters hologram 18 at surface 54 at an angle $\Theta_I$ with respect to the perpendicular. The beam 14 enters the material 50 at an internal incidence angle $\alpha_1$ = asin (sin$\Theta_I$/n$^0$) where $n_0$ is the average index of refraction of material 50 (typically 0.26). This change in angle is due to refraction. A portion of beam 14 travels through material 50 without experiencing any diffraction and exits substrate 32 as beam 20. Note that beam 20 experiences refraction at surfaces 56 and 60. This is because material 50 and substrate 52 have different indices of refraction. However, these refractions are equal and opposite so they cancel each other. Beam 20 exits surface 60 at a transmitted output angle of $\Theta_{TO}$. $\Theta_{TO}$ is equal to $\Theta_I$ and beam 20 will appear to be transmitted through hologram 14 without diffraction.

A portion of beam 14 is diffracted by the Bragg planes 70. The angle of beam 14 relative to Bragg plane 70 is $\Theta_0$ and is equal to asin [$\lambda_1$/2n$_0$L]. The diffracted beam encounters surface 56 at an internal diffraction angle $\beta_1$. The diffracted beam exits substrate 32 at surface 60 as beam 22. Again, there is refraction at surfaces 56 and 60. Beam 22 exits surface 60 at a diffracted output angle of $\Theta_{DO}$. $\Theta_{DO}$ equals asin [n$_0$sin$\beta_1$]. The exact properties of beams 20 and 22 are described in more detail below.

In designing the hologram 18, the following variables are taken into account:

$\Theta_I$ = angle of incidence (external).
$\alpha_1$ = angle of incidence (internal).
$\beta_1$ = angle of diffraction (internal).
$\delta$ = deviation from the Bragg angle. Assumed to be equal to zero.
$\Phi$ = tilt of Bragg planes
= $\pi$/2 for no tilt.
L = separation of the Bragg planes.
T = thickness of hologram material.
d = external fringe spacing.
$n_0$ = average refractive index of the hologram medium, typically 1.26 for an exposed and processed dichromated gelatin holographic grating with high n$_1$.
$n_1$ = Peak change in index of refraction of the hologram medium.
Typically 0.1 for dichromated gelatin.
$\lambda$a = wavelength of light in air. Here $\lambda$a = $\lambda_1$ = 780nm.
$\delta\lambda$ = deviation from $\lambda$a (Bragg $\lambda$). Assumed to be equal to zero.

These variables are used in the following formulas:

$$(1) \qquad \alpha = asin[\frac{sin[\theta_I]}{n_0}]$$

$$(2) \qquad \phi = \frac{\pi}{2} - \frac{\beta - \alpha}{2}$$

$$(3) \qquad \theta_0 = \alpha + \frac{\pi}{2} - \phi$$

$$(4) \qquad L = \frac{\lambda_a}{2n_0 sin[\theta_0]}$$

$$(5) \qquad d = \frac{L}{\sin(\theta)}$$

$$(6) \qquad C_R = \cos(\alpha)$$

$$(7) \qquad C_S = \cos(\alpha) - \frac{\lambda_a}{n_0 L}\cos(\phi)$$

$$(8) \qquad N = \pi n_1 \frac{T}{\lambda_a \sqrt{C_R C_S}}$$

$$(9) \qquad \Gamma = 2\pi\delta\frac{\sin[\phi - \theta_0]}{L} - \delta_\lambda \frac{\pi}{n_0 L^2}$$

$$(10) \qquad S = \Gamma\frac{T}{2C_S}$$

$$(11) \qquad E_S = \frac{[\sin[\sqrt{N^2 + S^2}]]^2}{1 + \frac{S^2}{N^2}}$$

$$(12) \qquad E_P = \frac{[\sin[\sqrt{[N\cos[2\theta_0]]^2 + S^2}]]^2}{1 + \frac{S^2}{[N\cos[2\theta_0]]^2}}$$

Formulas 11 and 12 above give the diffraction efficiencies for the S and P orthogonal polarization components and determine the conditions of the beams 20 and 22. Es is the diffraction efficiency of the S polarized light component and Ep is the diffraction efficiency of the P polarized light component. The S and P represent the orthogonal polarization components of the light. A more detailed discussion of hologram mathematics is given by Herwig Kogelnik in "Coupled Wave Theory for Thick Hologram Gratings," Bell System Technical Journal, Vol. 48, No. 9, p. 2909 (November 1969).

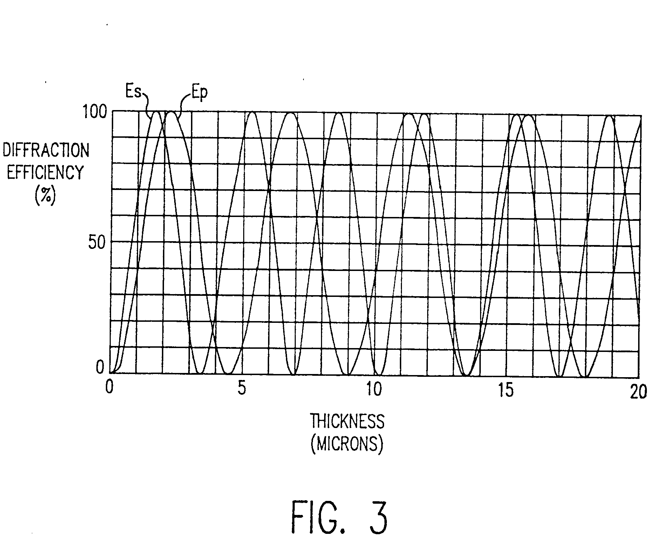

Fig. 3 shows a graph of diffraction efficiency for Es and Ep versus the thickness T of the material 50 for $\Theta_I = 0$ degrees, $\beta_1 = 41.41$ degrees, $n_0 = 1.26$, $n_1 = 0.2$, and $\lambda_a = 780$ nm. The diffraction efficiency represents the percentage of beam 14 which will be diffracted as beam 22. The remaining portion of beam 14 will continue as beam 20.

For example, at a thickness T equals 6.75 microns, 100 percent of the P polarized light will be diffracted as beam 22 and zero percent of the S polarized light will be diffracted. Beam 22 will have 100 percent P polarized light and zero percent S polarized light while beam 20 will have 100 percent S polarized light and zero percent P polarized light. In such a case, the hologram 18 functions as a polarization beamsplitter.

Beams 20 and 22 may both contain S and P polarization components. For example, at T equals 3 microns, beam 22 will have 12 percent of the S polarized light and 75 percent of the P polarized light of beam 14.

Beam 20 will have 88 percent of the S polarized light and 25 percent of the P polarized light of beam 14.

If polarization components are not a consideration, hologram 18 may also be used as a variable power beamsplitter. For example, at T equals 7.72 microns, beam 22 will contain 61 percent of the light of beam 14 and beam 20 will contain 39 percent of the light of beam 14. Each beam will then contain equal portions of the two orthogonal polarization components.

In the case of hologram 30, if it is desired to diffract 100 percent of the beam 22 to a desired angle, a thickness which results in 100 percent diffraction of both S and P polarizations is chosen.

It can be seen that by varying the thickness of the hologram, various amounts of beamsplitting and/or polarization separation are possible. Also, by diffracting 100 percent of the beam, angular selection is possible.

In designing the hologram assembly 34, hologram 18 is made such that beam 14 hits hologram 18 at the angle $\Theta_I$ which is the Bragg angle for hologram 18. Hologram 30 is designed such that beam 22 hits hologram 30 at an angle $\Theta_I$ which is the Bragg angle for hologram 30. Beam 20 hits hologram 30 at an angle at which it experiences no diffraction and is transmitted. The exact angles and hologram thickness is determined by using equations (11) and (12) to obtain the desired diffraction efficiency for each beam.

In a preferred embodiment, hologram system 10 acts as a polarization beamsplitter. Beam 20 contains approximately 100 percent of the S-polarization and beam 22 contains approximately 100 percent of the P-polarization of beam 14. Beam 22 exits hologram 30 at an angle of 2.0 degrees relative to beam 20. In this preferred embodiment of assembly 34, for hologram 18, T equals 13.9 μm, $\alpha 1 = 3.81$ degrees and $\beta 1 = 37.47$ degrees. In the case of hologram 30, T = 13.5 μm, $\alpha 1 = 2.22$ degrees and $\beta 1 = 37.47$ degrees.

Once the thickness T and the desired angles are determined, the hologram is manufactured. In order to record the hologram it is necessary to use a light wave length which will react with the hologram material. In a preferred embodiment, dichromated gelatin is used as the hologram material and a recording wavelength $\lambda_2$ of approximately 488 nanometers is used.

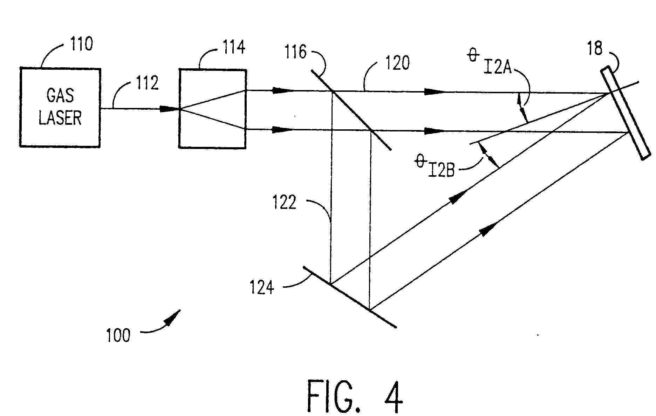

Fig. 4 shows a schematic diagram of a system for manufacturing the hologram 18 and is designated by the general reference number 100. System 100 has a gas laser 110 which emits a light beam 112 at the recording wavelength $\lambda_2$. Beam 112 is expanded by a beam expander 114. A beamsplitter 116 splits beam 112 into an object beam 120 and an image beam 122. Beam 122 is reflected by a mirror 124 to hologram 18. Beams 120 and 122 intersect at the hologram 18 at recording external incident angles of $\Theta_{12A}$ and $\Theta_{12B}$. The angles $\Theta_{12A}$ and $\Theta_{12B}$ are determined by the conditions of the desired hologram (L, $\Phi$) as was described above. The recording internal angles of incidence are $\alpha_{2A} = \Phi - pi/2 - \text{asin}[\lambda_2/2n_{0L}]$ and $\alpha_{2B} = \Phi - \pi/2 + \text{asin}[\lambda_2/2n_0L]$. From Snells Law, $\Theta_{12A} = \text{asin}[n_0\sin\alpha_{2A}]$ and $\Theta_{12B} = \text{asin}[n_0\sin\alpha_{2B}]$. The hologram material 50 of hologram 18 is thereby exposed to light of $\lambda_2$ at an-

gles $\Theta_{12A}$ and $\Theta_{12B}$. The result is that the desired Bragg planes are recorded into the film. A similar process is used to make hologram 30.

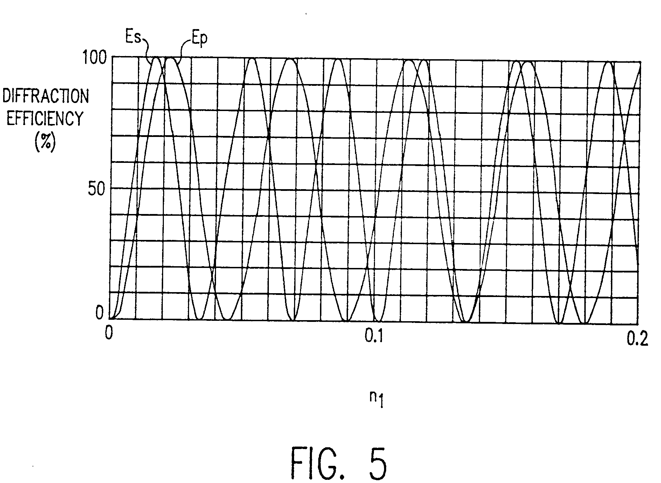

Fig. 5 shows a graph of diffraction of efficiency versus $n_1$ (peak change in index of refraction of the hologram medium). This graph is for a hologram having a thickness T of 20 microns, $n_o = 1.26$, $\lambda_a = 780$ nanometers, $\Theta_1 = 0$ degrees, and $\beta_1 = 41.41$ degrees. This graph is used to illustrate the fact that the polarization efficiency of the hologram also varies with $n_1$. Therefore, an alternative way to make the holograms of the present invention is to use a standard thickness (T) and then solve equations (11) and (12) by selecting the desired $n_1$. The term $n_1$ depends on the amount of time the hologram is exposed to light during the manufacturing process as described in Fig. 4. Therefore, by proper timing of the exposure of the hologram in the process, the desired properties of the hologram are obtained.

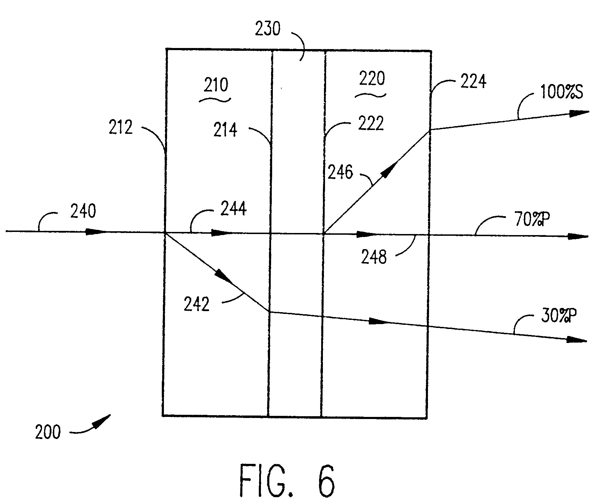

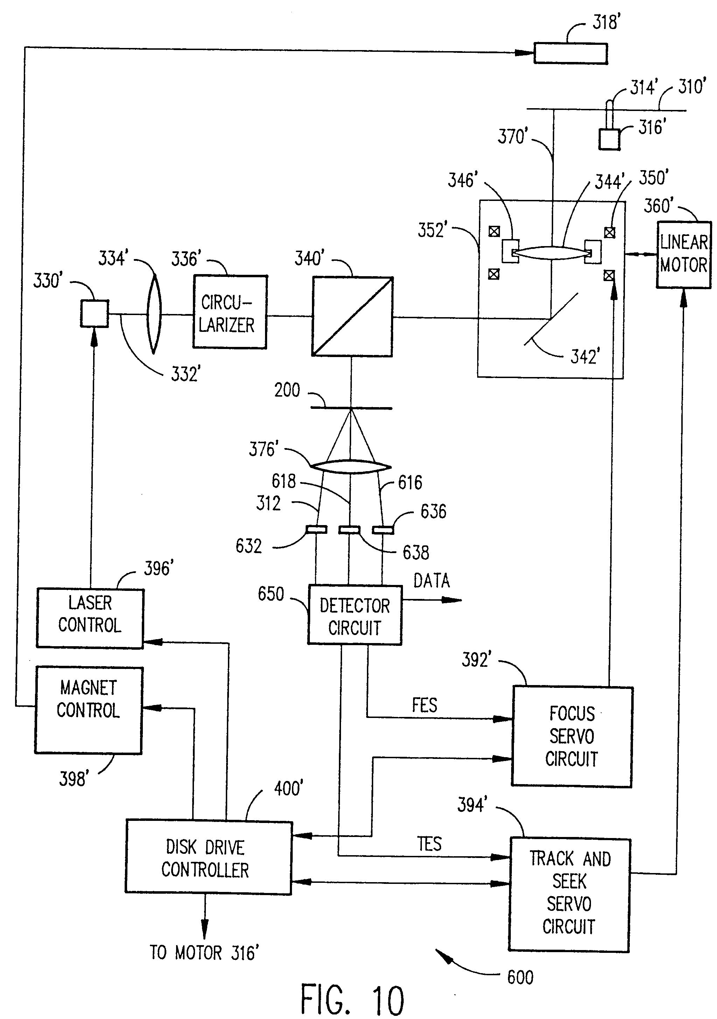

Fig. 6 shows a cross sectional view of a multiple hologram and is designated by the general reference number 200. Hologram 200 may be used where it is desired to split a beam into three separate beams. This may be desired in optical storage systems for providing a separate beam for purposes of providing servo information and will be discussed in more detail with reference to Fig. 10 below. Hologram 200 has a substrate 210 which has a beamsplitting hologram 212 on one surface and a beam directing hologram 214 on a second surface. A substrate 220 has a beamsplitting hologram 222 on one surface and a beam directing hologram 224 on a second surface. Substrates 210 and 220 may be made of glass and are secured together by optical cement 230 such as an ultraviolet cured adhesive which has an index of refraction approximately equal to the substrate. Substrates 210 and 220 are preferably 1-2 mm thick.

A light beam 240 ($\lambda_1 = 780$ nanometers) enters beamsplitting hologram 212 at the Bragg angle of the hologram 212. Hologram 212 is designed to diffract 30 percent of the P polarized light of beam 240 as a beam 242 and zero percent of the S polarized light of beam 240.

The remaining portion of beam 240 (now referred to as beam 244) containing 70 percent P polarized light and 100 percent S polarized light of beam 240 is transmitted by hologram 212 without diffraction. In a preferred embodiment of hologram 212, T equals 14.86 microns, $\alpha_1 = 0$ degrees and $\beta_1 = 24.8$ degrees.

Beam 242 enters beam directing hologram 214 at the Bragg angle of that hologram 214. Beam 242 is 100 percent diffracted by hologram 242 to a new angle. Beam 244 enters hologram 214 at a non-Bragg angle such that it does not experience any diffraction. In a preferred embodiment of hologram 214, T = 29.7 microns, $\alpha_1 = 24.8$ degrees and $\beta_1 = 4.2$ degrees.

Beam 244 enters hologram 222 at the Bragg angle of that hologram. Approximately one hundred percent of the S polarized light of beam 244 is diffracted as a beam 246. The remaining P polarized light of beam 244 (now referred to as beam 248) is undiffracted.

Beam 242 enters hologram 222 at a non-Bragg angle and is not diffracted. In a preferred embodiment of hologram 222, T = 17.4 microns, $\alpha_1 = 0$ degrees and $\beta_1 = 36.9$ degrees.

Beam 246 enters hologram 224 at the Bragg angle of that hologram and is approximately 100 percent diffracted to a new angle. The beams 248 and 242 each enter hologram 224 at a non-Bragg angle such that they are not diffracted. In a preferred embodiment of hologram 224, T = 31.3 microns, $\alpha_1 = 36.9$ degrees, and $\beta_1 = 5.7$ degrees.

The result of hologram system 200 is that beam 240 is separated into three beams 242, 248 and 246 containing 30 percent P polarized light, 70 percent P polarized light, and 100 percent S polarized light, respectively, of the original beam 240. The holograms 212 and 222 divide the beams while holograms 214 and 224 adjust the output beams to the desired angles.

It can be seen that by using the hologram in a manner taught by the present invention, any desired beam separation and angle adjustment may be achieved.

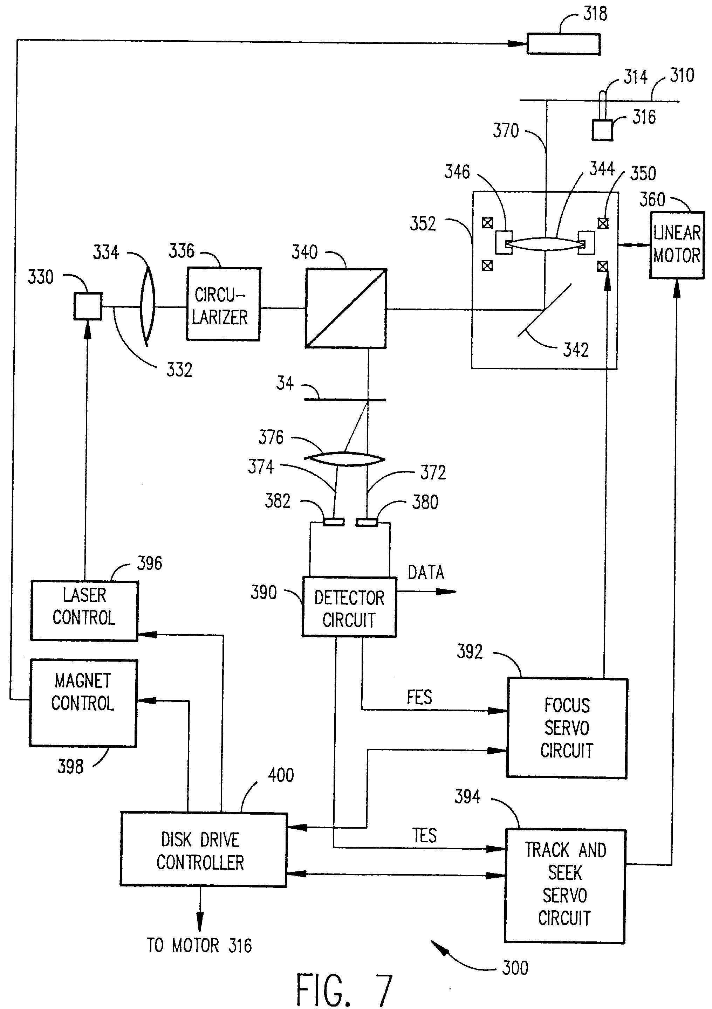

The present invention may be used in optical data storage systems. Fig. 7 shows a schematic diagram of an optical data storage system of the present invention and is designated by the general reference number 300.

System 300 includes an optical data storage medium 310 which is preferably disk-shaped. Medium 310 is preferably a magneto-optic medium. Medium 310 is removably mounted to a clamping spindle 314 as is known in the art. Spindle 314 is attached to a spindle motor 316. Motor 316 rotates spindle 314 and medium 310. A bias electro-magnet 318 is located above medium 310.

A laser 330 generates a light beam 332. Laser 330 may be a gallium-aluminum-arsenide diode laser which produces light at approximately 780 nm in wavelength.

Beam 332 is collimated by a lens 334 and is circularized by a circularizer 336. Circularizer 336 may be a circularizing prism. Beam 332 passes through a beamsplitter 340. Beam 332 is then reflected by a mirror 342 to a lens 344. Lens 344 focuses beam 332 to medium 310. Lens 334 is mounted to a lens holder 346. Holder 346 may be moved up or down relative to medium 310 by a focus actuator motor 350 which may be voice coil motor.

Mirror 342, lens 344, holder 346 and motor 350 comprise an optical head 352. Head 352 may be moved in a radial direction relative to medium 310 by a linear motor 360.

A portion of beam 332 is reflected by medium 310 as a beam 370. Beam 370 passes through lens 344 and is reflected by mirror 342 to beamsplitter 340. At beamsplitter 340, beam 370 is reflected to hologram assembly 34. At assembly 34, beam 370 is divided into a beam 372 and 374 which correspond to beams 20 and 22, respectively, as shown in Fig. 1.

Beams 372 and 374 are focussed by a lens 376 to a segmented optical detector 380 and a single optical detector 382, respectively. Detectors 380 and 382 are connected to a detector circuit 390. Detector circuit 390 outputs a data signal, a focus error signal (FES) and a tracking error signal (TES). A focus servo 392 is connected to circuit 390 and to motor 350. A track and seek servo 394 is connected to detector circuit 390 and to linear motor 360. A laser control 396 is connected to and provides power to laser 330. A magnet control 398 is connected to and provides power to magnet 318. A disk drive controller 400 is connected to and controls motor 316, servos 392 and 394, laser control 396 and magnet control 398. Servos 392 and 394, laser control 396, magnet control 398 and controller 400 are all known in the art.

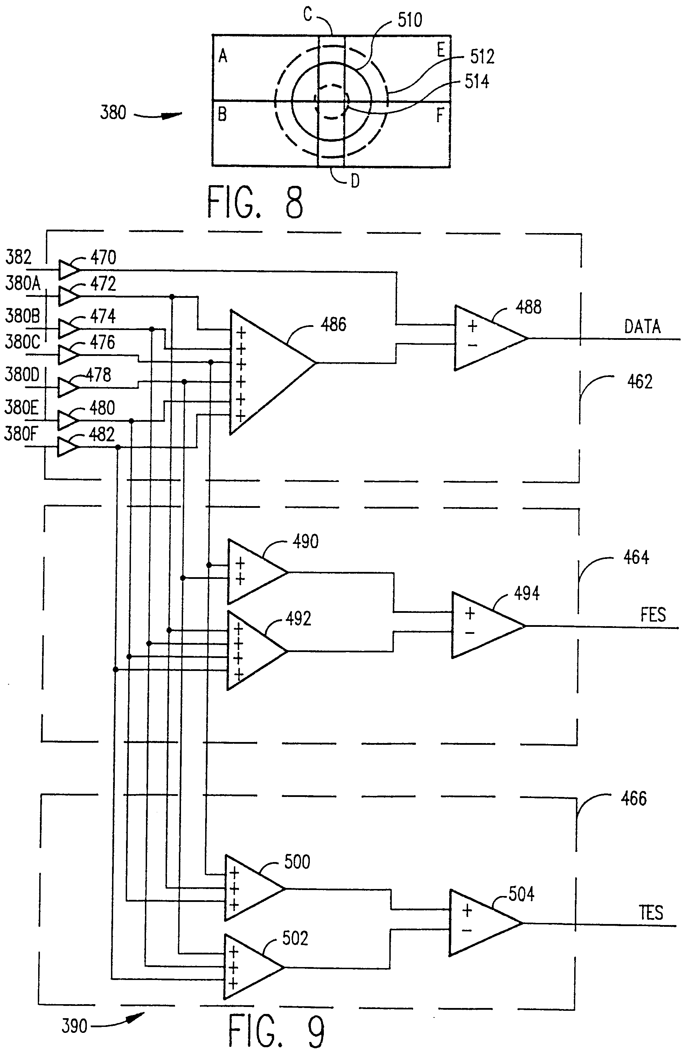

Fig. 8 shows a top view of detector 380. The detector 380 is divided into six sections 380A, B, C D, E and F.

Fig. 9 shows a circuit diagram of a detector circuit 390. Circuit 390 comprises a data circuit 462, a focus error circuit 464, and a tracking error circuit 466. Data circuit 462 has an amplifier 470 connected to detector 442 and a plurality of amplifiers 472, 474, 476, 478, 480 and 482 connected to optical detector segments 380A, B, C, D, E and F, respectively. Amplifiers 472-482 are connected to a summing amplifier 486. Amplifier 470 and amplifier 486 are connected to a differential amplifier 488. The output amplifier 488 is the data signal.

The focus error circuit 464 comprises a pair of summing amplifiers 490 and 492, and a differential amplifier 494. Amplifier 490 is connected to amplifiers 476 and 478. Amplifier 492 is connected to amplifiers 472, 474, 480 and 482. Amplifiers 490 and 492 are connected to differential amplifier 494 and the output of amplifier 494 is the focus error signal (FES).

Tracking error circuit 466 comprises a pair of summing amplifiers 500 and 502, and a differential amplifier 504. Amplifier 500 is connected to amplifiers 472, 476 and 480. Amplifier 502 is connected to amplifiers 474, 478 and 482. Amplifier 504 is connected to amplifiers 500 and 502 and outputs a tracking error signal (TES).

The operation of system 300 may now be understood. When it is desired to write data onto medium 310, magnet 318 and laser 330 are turned on. Laser 330 produces a write beam 332 which is of sufficient intensity to heat spots on medium 310 to a temperature above its Curie temperature. At this temperature, the spots will align with the magnetic field produced by magnet 318. Laser 330 is controlled to provide a pulsed beam 332 representative of the data to be recorded. The data is thus recorded as spots on medium 310 which have an up or down magnetic orientation.

During the write operation, reflected beam 370 returns to hologram element 34. The beam 370 is divided into an S-polarization component beam 374 and a P-polarization component beam 372. See Fig. 8. When beam 332 is exactly focussed on medium 310, beam 372 will have a circular cross-section 510 on detector 380. The amount of light hitting areas C and D will be approximately equal to the amount of light hitting areas A, B, E and F, and will cause circuit 462 to output a zero focus error signal. If beam 332 is slightly out of focus one way or the other, beam 372 will fall as a circular cross-section 512 or 514 on detector 380. This will cause circuit 464 to output a positive or negative focus error signal. The focus error signal is used to control motor 350 to move lens 344 until the focus is again achieved.

If beam 332 is focussed exactly on a track of medium 310, then beam 372 will fall as a circular cross-section 510 equally between the sections A, C and E, and the sections B, D and F. If beam is off track it will fall more on sections A, C and E, and less on sections B, D and F, or visa versa. This will result in a positive or negative tracking error signal being produced by circuit 390. This tracking error signal is then used to control motor 360 to move head 352 until the beam is once again on track.

When it is desired to read data recorded on the disk, laser 330 is energized to produce a read beam 332. Read beam 332 is of low enough intensity such that medium 310 is not heated to above its Curie temperature. The beam 332 is focussed by a lens 344 onto medium 310. The data has already been recorded on the medium as up or down oriented magnetic domains.

Light reflected from the medium has its plane of polarization rotated one way or the other depending on the orientation of the magnetic domains. The reflected beam 370 returns and is divided into beam 372 and 374 at hologram element 34. The S-polarization component beam 374 is detected by a detector 382 and the P-polarization component beam 372 is detected by detector 380. Circuit 390 compares the intensity of the two beams and outputs a data signal which is representative of the data recorded medium 310.

Fig. 10 shows a schematic diagram of an alternative embodiment of the optical data storage system of the present invention and is designated by the general reference number 600. Elements of system 600 which are similar to elements of system 300 are designated by a prime number. The system 600 uses hologram element 200 to divide the returning beam 370′ into three beams in order to achieve separate data and servo detection.

At hologram element 200, beam 370′ is divided into beams 612, 616 and 618 which are similar to beams 242, 246 and 248, respectively, of Fig. 6. Beam 612 and 616 are focussed to optical detectors 632 and 636, respectively. Beam 618 is focussed to a segmented optical detector 638 which is similar to detector 380 of system 300. The detectors 632, 636 and 638 are connected to a detector circuit 650.

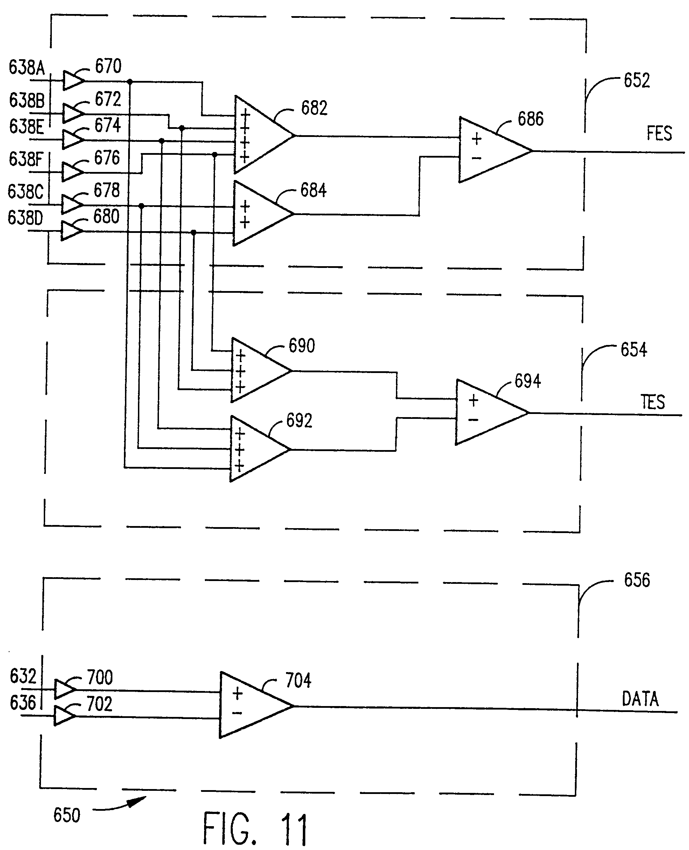

Fig. 11 shows a circuit diagram of the detector circuit 650. Circuit 650 is comprised of a FES circuit 652, a TES circuit 654, and a data circuit 656. Circuit 652 comprises a plurality of amplifiers 670-680, a pair of summing amplifiers 682 and 684, and a differential amplifier 686. Circuit 654 comprises a pair of summing amplifiers 690 and 692, and a differential amplifier 644. Circuit 656 comprises a pair amplifiers 700 and 702, and a differential amplifier 704. Amplifier 700 is adjusted relative to amplifiers 702 in order to compensate for differences in intensity caused by element 200.

The operation of system 600 is the same as that described above for system 300, the only difference being the additional separation of the servo beam 618 from the data beams 612 and 616.

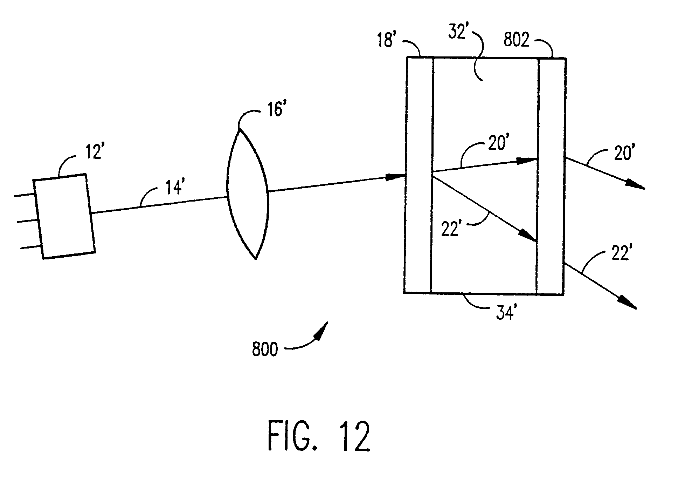

Fig. 12 shows an alternative hologram assembly which is referred to by the general reference number 800. Assembly 800 is similar to assembly 34 of Fig. 1 with the exception that a hologram 802 replaces hologram 30. In assembly 800, hologram 802 diffracts beam 20′ to a desired angle and allows beam 22′ to pass undiffracted. This is contrast to hologram 30 which diffracts beam 22 instead. Beam 20′ contains approximately 100 percent of the S polarized light and beam 22′ contains approximately 100 percent of the P polarized light of beam 14′. Beam 22′ exits hologram 802 at an angle of 2.0 degrees relative to beam 20′. In a preferred embodiment for hologram 802, T = 17.7 μm, α1 = 3.81 degrees, and β1 = 30.28 degrees.

The present invention may also be used in a direct read after write (DRAW) optical data storage system. DRAW systems require two beams: one to write and another to read what has just been written. The hologram element of the present invention may be used to divide a single laser beam into the two beams, with each beam having a desired intensity level. This would reduce the cost of the optical systems since an additional laser would not be required.

The advantages of the present invention may now be understood. The present invention teaches a hologram system which can be used to divide a single beam in to multiple beams of any desired strength, polarization and angular separation. The first hologram divides the beam and the second hologram adjusts the angular separation.

**Claims**

1. A hologram system comprising a first volume hologram arranged to receive a radiation beam from a radiation source and to diffract a first portion of the radiation beam as a first beam and to transmit a second portion of the radiation beam as a second beam and a second volume hologram arranged to receive the first and second beams and to diffract one of said beams at a desired angle and to transmit the second beam.

2. The system of claim 1, wherein the first and second beams have different intensities.

3. The system of claim 1, wherein the first and second beams contain different percentages of the polarization components of the original radiation beam.

4. The system of claim 1, wherein the diffraction efficiency of the first and second holograms is determined by the thickness of each hologram.

5. The system of claim 1, wherein the diffraction efficiency of the first and second holograms is determined by the peak change in refractive indices of each hologram.

6. A system as claimed in any preceding claim, comprising a substrate having a first and a second surface, the first hologram being located on the first surface and the second hologram being located on the second surface.

7. A hologram system as claimed in any preceding claim, further comprising a third volume hologram receiving the first and second beams and diffracting a portion of one of said first and second beams as a third beam and transmitting the remaining portion of said beam as a fourth beam and transmitting the remaining beam undiffracted; and a fourth volume hologram receiving the first, third and fourth beams and diffracting one of said first, second and fourth beams at a desired angle, and transmitting the remaining beams undiffracted.

8. A method for operating a hologram system to produce separate light beams comprising the steps of generating a collimated beam of light, directing the beam of light to a first volume hologram such that the first hologram diffracts a first portion of the beam of light into a first beam and transmits a second portion of the beam of light as a second beam, and directing the first and second beams to a second volume hologram, the second hologram diffracting one of said beams at a desired angle and transmitting the other beam.

9. A hologram system comprising a radiation source for producing radiation; an optical data storage medium; a radiation transmission means for directing the radiation to the optical data storage medium; and an optical reception means for receiving a reflected radiation beam from the optical storage medium, the optical reception means having a volume hologram system for separating the reflected radiation into a plurality of beams.

10. The system of claim 9, wherein the volume hologram system comprises a first hologram for receiving the reflected radiation beam and diffracting a first portion of the reflected radiation beam as a first beam and transmitting a second portion of the reflected radiation beam as a second beam, and a second volume hologram receiving the first and second beams and diffracting one of said beams at a desired angle and transmitting the other beam.

11. The system of claim 9, wherein the volume hologram system comprises a first volume hologram receiving the reflected radiation beam and diffracting a first portion of the reflected radiation beam as a first beam and transmitting a second portion of the reflected radiation beam as a second beam, a second volume hologram receiving the first and second beams and diffracting one of said first and second beams at a desired angle and transmitting the other beam, a third volume hologram receiving the first and second beams and diffracting a portion of one of said first and second beams as a third beam and transmitting the remaining portion of the said beam as as fourth beam and transmitting the remaining beam undiffracted, and a fourth volume hologram receiving the first, third and fourth beams and diffracting the third beam at a desired angle, and transmitting the first and fourth beam undiffracted.

FIG. 1

FIG. 2

FIG. 3

FIG. 4

FIG. 5

FIG. 6

FIG. 7

FIG. 8

FIG. 9

FIG. 10

FIG. 11

FIG. 12

| | European Patent Office | **EUROPEAN SEARCH REPORT** | Application Number |
|---|---|---|---|
| | | | EP 92 30 8854 |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | US-A-5 013 107 (BILES)<br><br>* column 6, line 19 - column 7, line 26 *<br>* abstract; claim 1; figure 4A *<br>--- | 1,3,6,<br>8-10 | G02B5/32 |
| D,Y | US-A-4 497 534 (SINCERBOX)<br><br>* column 2, line 26 - column 3, line 37 *<br>* figures 2,3 *<br>--- | 1,3,6,<br>8-10 | |
| D,A | PATENT ABSTRACTS OF JAPAN<br>vol. 12, no. 86 (P-677)(2933) 18 March 1988<br>& JP-A-62 219 340 ( FUJITSU ) 26 September 1987<br>* abstract *<br>--- | 1,6 | |
| D,A | PATENT ABSTRACTS OF JAPAN<br>vol. 12, no. 233 (P-724)(3080) 5 July 1988<br>& JP-A-63 025 845 ( FUJITSU ) 3 February 1988<br>* abstract * | 1 | |
| | ----- | | **TECHNICAL FIELDS SEARCHED (Int. Cl.5 )**<br><br>G02B<br>G03H |

The present search report has been drawn up for all claims

| Place of search | Date of completion of the search | Examiner |
|---|---|---|
| THE HAGUE | 03 FEBRUARY 1993 | KRAMETZ E.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document